# EUROPEAN PATENT APPLICATION

(11) **EP 3 031 719 A1**
(43) Date of publication of application: **15.06.2016**
(21) Application number: 14460099.6
(22) Date of filing: 10.12.2014
(51) Int. Cl.: B64C 27/08, B64C 27/43

(54) **Lift rotor for a rotorcraft, particularly for a gyroplane**

(71) Applicant: Fusioncopter Sp. z o.o, 02-748 Warszawa (PL)
(72) Inventor: Lichota, Jacek, 02-748 Warszawa (PL)
(74) Representative: Woznicki, Jerzy

(57) **Abstract**

The lift rotor has at least two two-bladed rotors teeter hinge mounted on a common shaft (1), each of which is provided with a pair of blades (2) connected to the teeter hinge connector (5) pivotally mounted to the shaft (1) by means of a teeter hinge (3) having an axis of rotation disposed perpendicularly to the axis of the shaft (1). The mutual angular configuration of the two-bladed rotors, measured in a plane orthogonal to the axis of the shaft does not exceed 45 degrees, wherein the relative angular displacement of the blades (2) of the subsequent rotors in the blade assembly on one side of the shaft (1) is from 10 to 45 degrees. Another rotor has at least two pairs of opposed blades (2) attached to the teeter hinge member (6, 7), wherein the mutual angular configuration of the blades (2) in the blade assembly on one side of the shaft (1), measured in a plane orthogonal to the axis of the shaft (1), does not exceed 45 degrees, and the angular displacement of the subsequent blades (2) in the blade assembly on one side of the shaft (1) is from 10 to 45 degrees.

## Description

The object of this invention is a lift rotor to a rotorcraft, in particular a gyroplane, comprising two or more two-bladed rotors which are teeter hinge mounted to the drive shaft of the rotor.

In the case of the rotorcrafts, two types of rotor construction - two-bladed and multi-bladed - are essentially used. In two-bladed rotors of a simple construction, the blades are connected together on so-called teeter hinge device, on which they are swinging during rotation. The teeter hinge device is in a form of a connector pivotally mounted on a teeter hinge, the axis of which is orthogonal to the axis of the shaft. On both sides of the teeter hinge the pitch control mechanism, intended substantially for helicopters, can be mounted. The connection between the blades can be completely rigid or made flexible. The connection of a pair of blades on the teeter hinge device permits balanced and stable movement of the blades. Due to that a single two-bladed rotor does not generate excessive vibration.

Two-bladed rotors have a limited aerodynamic lift. To obtain a bigger aerodynamic lift, the rotor diameter, the blade chord or the rotational speed should be increased. In the case of increasing of the rotor diameter or the rotational speed a number of adverse events occur leading to the destruction of the rotor, particularly at a speed of blade tip close to the sonic speed. When increasing the blade chord the aerodynamic efficiency of a blade, and thus the rotor, is decreased. Therefore, multi-bladed rotors are used in order to increase the aerodynamic lift of the gyroplane or other rotorcraft and to develop larger machines.

In multi-bladed rotors having three or more blades, various kinds of transverse and longitudinal dampers are introduced between the blades and the rotor axis in order to achieve stable operation without excessive vibration, which make blades independent in all planes of motion. In more advanced designs different mechanisms for individual positioning of the blades or mechanisms for releasing of their mutual movement relative to each other are used. However, such solutions are much more complicated and increase the weight of the rotor.

There are known examples of lift rotors equipped with at least two equally arranged two-bladed rotors having a common axis and the same direction of rotation, but in such structures the additional equipment limiting adverse effect of both rotors to the drive shaft should be used. From EP 2604520 is known the lift rotor with two two-bladed rotors teeter hinge mounted on a common shaft. In this embodiment, in order to reduce vibration and to balance torque a torque divider associated with the two rotors is applied. In addition, this embodiment provides possibility of uneven angular alignment of the two rotors to each other, at an angle different from 90 degrees. This solution allows to increase thrust and load capacity, but because of the required additional torque dividing mechanisms which simultaneously increase the weight, this solution is complicated and is not suitable for use in light rotorcrafts.

The aim of the invention is to provide a teeter hinge lift rotor of simplified design and increased aerodynamic lift consisting of two or more two-bladed rotors mounted to a common shaft.

So far, there are no known simple solutions allowing achieving stable vibration-free operation of the teeter hinge lift rotor in a case of using more blades. In such cases it is necessary to provide a rotor with additional mechanisms for dividing a torque between two two-bladed rotors or allowing free movement of each blade individually.

The problem of the structure of the lift rotor in which more than two blades should cooperate relies on vibrations generated by the blades derived from the influence of the blades on the rotor shaft and to each other. In order to prevent destruction of the rotor due to excessive vibration, the blades are mounted via hinges so that they move independently in both the horizontal and vertical planes. Up to now, the only one type of a rotor, in which there is no need to make hinges of blades more flexible, is a two-bladed teeter hinge rotor, which allows compensating a movement of opposed blades in a rotational motion about the drive shaft. When one blade moving forward is going up as a result of a greater aerodynamic lift and the opposing blade is going down as a result of a less aerodynamic lift, their mutual rigid connection by a connector causes compensation of loads. Similarly, when the blade moving forward is slowing down and simultaneously the other blade rigidly associated to it is speeding up moving backwards, those movements are mutually compensated.

On the basis of the tests which were carried out it was found that the major vibrations of the lift rotor consisting of two two-bladed teeter hinge rotors are occurred when they are mutually arranged at an angle of 90 degrees, regardless of whether the connection between the rotors is fully rigid or made more flexible. The same occurs for the design of the multi-bladed rotor provided with four blades rigidly fixed relative to each other at an angle of 90 degrees or with a greater number of blades equally spaced about the shaft axis. The vibrations become smaller with decreasing angle of mutual alignment of the rotors. However, when the angular displacement of the blade assembly on one side of the lift rotor shaft is close or equal to zero, there is a significant loss of the aerodynamic lift, which reduces the benefits of the use of a greater number of blades.

The lift rotor to a rotorcraft, particularly to a gyroplane, having at least two two-bladed rotors teeter hinge mounted on a common shaft, each of which is provided with a pair of blades connected to the teeter hinge connector pivotally mounted to the shaft by means of a teeter hinge having an axis of rotation disposed perpendicularly to the axis of the shaft, according to the invention is characterized in that the mutual angular configuration of the two-bladed rotors, measured in a plane orthogonal to the axis of the shaft does not exceed 45 degrees, wherein the relative angular displacement of the blades of the subsequent rotors in the blade assembly on one side of the shaft is from 10 to 45 degrees.

It is advantageous if each two-bladed rotor is mounted on the separate teeter hinge, wherein the axis of rotation of each teeter hinge is disposed in a different plane orthogonal to the axis of the shaft.

It is also advantageous if each two-bladed rotor is mounted on the separate teeter hinge, wherein the axis of rotation of each teeter hinge is disposed in the same plane orthogonal to the axis of the shaft.

It is also advantageous the embodiment in which the two-bladed rotors are rigidly connected via teeter hinge connectors which are teeter hinge mounted on the common teeter hinge.

It is further advantageous if the two-bladed rotors are provided with a blade pitch control mechanism for the blades which is mounted to the teeter hinge connector between each blade and the teeter hinge.

Another lift rotor to a rotorcraft, particularly to a gyroplane, provided with a teeter hinge member pivotally mounted to a shaft via a teeter hinge having an axis of rotation disposed perpendicularly to the axis of the shaft to which rotor blades are attached, characterized in that, it comprises at least two pairs of opposed blades attached to the teeter hinge member, wherein the mutual angular configuration of the blades in the blade assembly on one side of the shaft, measured in a plane orthogonal to the axis of the shaft, does not exceed 45 degrees, and the angular displacement of the subsequent blades in the blade assembly on one side of the shaft is from 10 to 45 degrees.

It is advantageous if the teeter hinge member is provided with a blade assembly pitch control mechanism for the assembly of blades which is mounted on both sides of the teeter hinge to the teeter hinge member.

The solution according to the invention has a simple and light structure, composed of at least two two-bladed rotors arranged on one or more number of teeter hinge devices, the blades of which in a plan view form an arrangement of an oblique cross with spacing on one side of the shaft of the arm assembly the angle not exceeding 45 degrees. This arrangement provides greater lifting capacity, relatively low levels of vibration at high flight speeds, and good controllability and stability at low flight speeds. In addition the rotorcraft having such blade arrangement is easy to hangaring without the need to introduce of blade folding mechanisms to the construction. Similar advantages has the multi-bladed teeter hinge rotor having at least two pairs of blades forming an oblique cross arrangement with an arm spacing not exceeding 45 degrees.

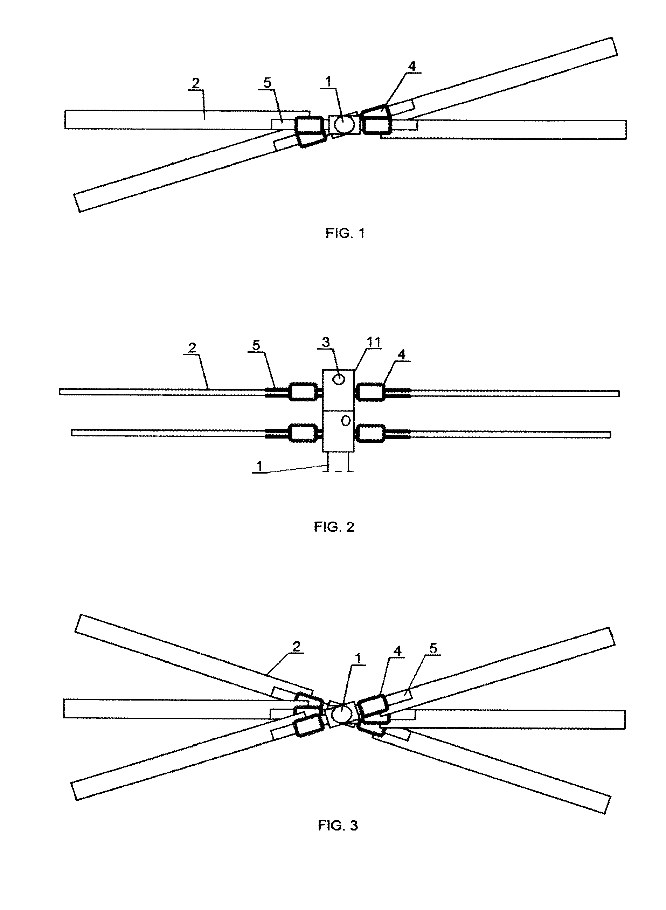

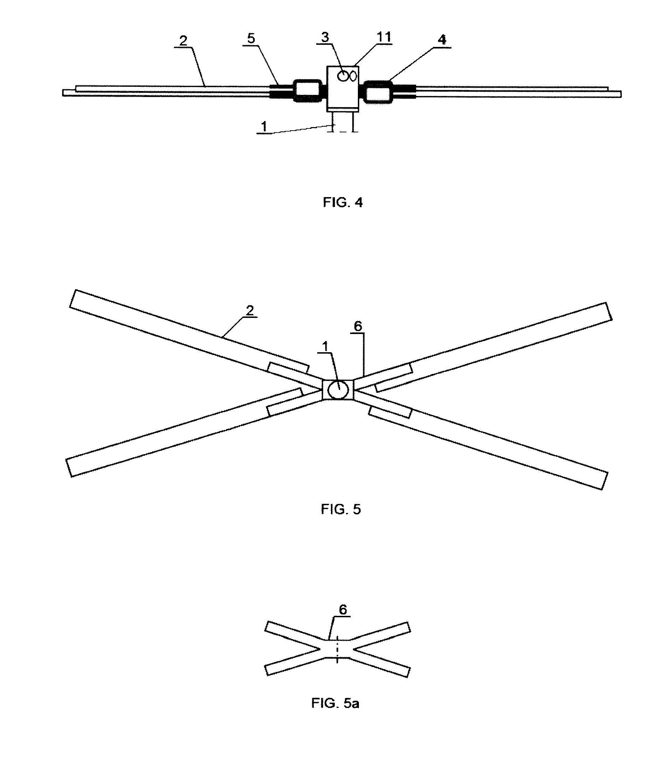

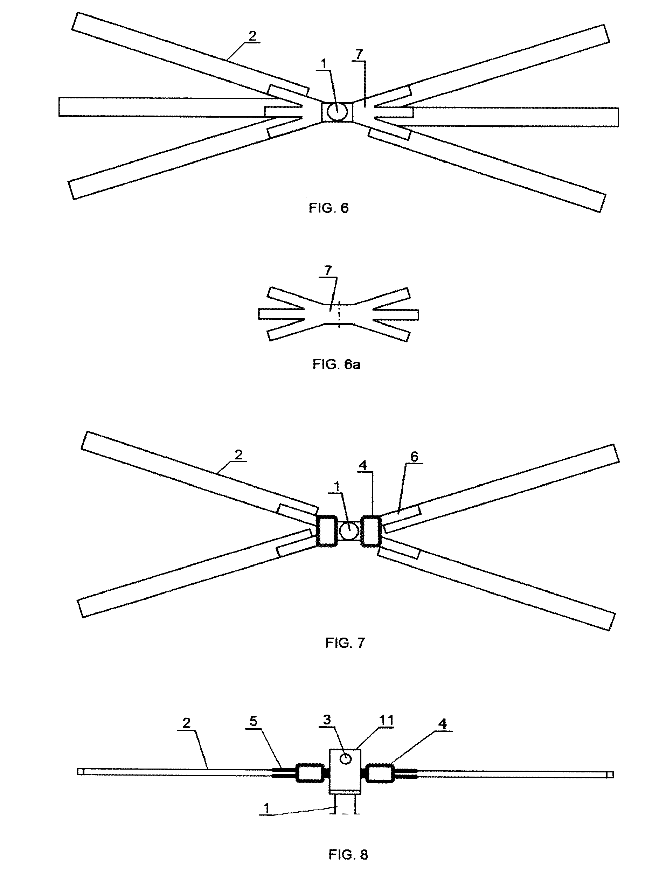

The invention is explained in the embodiment in the accompanying drawing, in which: fig. 1 shows in the top view the lift rotor comprising two two-bladed rotors mounted to the shaft in different planes orthogonal to the axis of the shaft, fig. 2 shows in the side elevational view the rotor of fig. 1 with a member supporting the teeter hinge device, fig. 3 shows in the top view the lift rotor comprising three two-bladed rotors mounted to the shaft in different planes orthogonal to the axis of the shaft, fig. 4 shows in the side elevational view the lift rotor comprising two two-bladed rotors mounted to the shaft in the same plane orthogonal to the axis of the shaft, fig. 5 shows in the top view the lift rotor comprising a teeter hinge member connected to two pairs of opposed blades, fig. 5a shows in the top view the teeter hinge member of fig. 5, fig. 6 shows in the top view the lift rotor comprising a teeter hinge member connected to three pairs of opposed blades, and fig. 6a shows in the top view the teeter hinge member of fig. 6, fig. 7 shows the lift rotor of fig. 5 with a teeter hinge member in the side elevational view, and fig. 8 shows in the side elevational view the rotor of fig. 7 with a member supporting the teeter hinge device.

In the first embodiment shown in figures 1, 2, the lift rotor has two two-bladed rotors teeter hinge mounted on a common shaft 1, each of which is provided with a pair of blades 2 connected to the teeter hinge connector 5 pivotally mounted to the shaft 1 by means of a separate teeter hinge 3 having an axis of rotation disposed perpendicularly to the axis of the shaft 1. The axis of rotation of each teeter hinge 3 is arranged in a different plane orthogonal to the axis of the shaft 1.The mutual angular configuration of the two-bladed rotors, measured in a plane orthogonal to the axis of the shaft, seen in fig. 1, is in the range of 10 to 45 degrees. In the case of increasing the number of rotors, their mutual angular configuration, measured in the orthogonal plane should be no more than 45 degrees, wherein the relative angular displacement of the blades 2 of the subsequent rotors in the blade assembly on one side of the shaft 1 should be from 10 to 45 degrees. Such configuration of lift rotor, with three two-bladed rotors, is shown in fig. 3. Each rotor can be equipped with a member supporting the teeter hinge device, such as a hub or flange 11 connected to the shaft. The vertical flanges 11 shown in fig. 2 are coupled coaxially to the shaft 1. The teeter hinge 3 can be inserted both through a hole in the shaft 1 and through a hole in the flange 11.

In the second embodiment shown in figure 4, the lift rotor has two two-bladed rotors teeter hinge mounted on a common shaft 1, each of which is provided with a pair of blades 2 connected to the teeter hinge connector 5 pivotally mounted to the shaft 1 by means of a separate teeter hinge 3 having an axis of rotation disposed perpendicularly to the axis of the shaft 1. The axis of rotation of each teeter hinge 3 is arranged in the same plane orthogonal to the axis of the shaft 1. The mutual angular configuration of the two-bladed rotors, measured in a plane orthogonal to the axis of the shaft, seen in fig. 4, is in the range of 10 to 45 degrees. In the case of increasing the number of rotors, their mutual angular configuration, measured in the orthogonal plane should be no more than 45 degrees, wherein the relative angular displacement of the blades 2 of the subsequent rotors in the blade assembly on one side of the shaft 1 should be from 10 to 45 degrees. In this embodiment, the universal joint or a variant thereof having relevant angular configuration of joint axes can be used to attach of the teeter hinges.

In the first and second embodiments the two-bladed rotors can be provided with the blade pitch control mechanism 4 mounted to the teeter hinge connector 5 between each blade 2 and the teeter hinge 3.

In the lift rotor according to the invention, the two-bladed rotors can be rigidly connected by means of teeter hinge connectors 5 teeter hinge mounted on a common teeter hinge 3. The rigidly connected teeter hinge connectors 5 can be replaced by a single teeter hinge member.

In the third embodiment shown in fig. 5, the lift rotor is provided with a teeter hinge member 6 pivotally attached to the shaft 1 on the teeter hinge 3 having an axis of rotation disposed perpendicularly to the axis of the shaft 1. Two pairs of opposite blades 2 are attached to the teeter hinge member 6, wherein the mutual angular configuration of the blades 2 in the blade assembly on one side of the shaft 1, measured in a plane orthogonal to the axis of the shaft 1 is in the range from 10 to 45 degrees. In the case of increasing number of pairs of blades 2, the angular displacement of the subsequent blades 2 in the blade assembly on one side of the shaft 1 should be from 10 to 45 degrees.

A fourth embodiment shown in fig. 6 differs from the embodiment of fig. 5 in that it has three pairs of blades 2 and the teeter hinge member 7 has three pairs of arms to which the blades 2 are attached.

In the example shown in figs. 5, 6 the teeter hinge connectors have been replaced by one-piece teeter hinge device in the form of the four-arm teeter hinge member 6, shown in fig. 5a, or the six-arms teeter hinge member 7 shown in fig. 6a. The teeter hinge member 6, 7 can be provided with the pitch control mechanism 4 of the assembly of blades 2 mounted on both sides of the teeter hinge 3. The change of the angle of attack occurs for the entire assembly of the blades 2 at both sides of the shaft 1, and not for each blade 2 separately, what simplifies the construction of the lift rotor. The rotor can be equipped with a member supporting the teeter hinge device, such as a hub or flange 11 connected to the shaft 1, seen in fig. 8.

In the embodiment according to the invention each two-bladed rotor can be provided on both sides of the teeter hinge with the blade pitch control mechanism designed principally for helicopters. The lift rotors designed for gyroplanes can be made without this mechanism. The connection between the blades can be fully rigid or made more flexible, as well as the connections between adjacent teeter hinge rotors. In each embodiment variant, the number of the teeter hinge rotors can be multiplied. The supporting elements of the rotor and the rotor drive shaft can be made of composite materials.

The lift rotor comprising of at least two teeter hinge mounted rotors, arranged at an angle not exceeding 45 degrees in relation to each other in plan view, allows stable operation without excessive vibrations, without the need for placement any additional mechanisms to control the blade angle or to balance the torque between the rotors. Such arrangement, in which all blades form the oblique cross arrangement in top view significantly reduces rotor vibrations caused by the blade advance effect and the blade delay effect of one blade in relation to the other. This applies particularly to the autorotation flight condition, which is typical condition for gyroplanes and emergency condition for helicopters. Analogous aerodynamic properties occur in the case of the lift rotor with at least two pairs of opposed blades attached to a common teeter hinge member, as in the third and fourth embodiments.

Tests carried out before the development of the invention showed that the greatest vibrations of the rotor shaft occur in the case of two rotors arranged mutually on a common shaft at an angle of 90 degrees. During simulated flight with such lift rotor, one teeter hinge rotor has the greatest displacement while the second rotor is in the phase of maximum load by the aerodynamic effect of braking one blade and acceleration of the second one. Swinging of blades affecting the vibration of the lift rotor are at right angles and at the time when there is no displacement of one teeter hinge rotor on the teeter hinge device, while the displacement of the second one is greatest. It quickly leads to multi-directional lateral vibrations that can cause the destruction of the lift rotor. Such situation does not occur when the mutual angle of the rotors does not exceed 45 degrees. Then the operation of the lift rotor will stabilize. The minimal angle of 10 degrees results due to the need to maintain the necessary spacing between the nearest blades located on the same side of the axis of the shaft.

It is understood that various changes or modifications to the invention disclosed in the specific embodiments are possible without departing from the scope of the described solution. Accordingly, the disclosed embodiments should be considered in all aspects as illustrative, but not limiting.

## Claims

1. A lift rotor to a rotorcraft, particularly to a gyroplane, having at least two two-bladed rotors teeter hinge mounted on a common shaft, each of which is provided with a pair of blades connected to the teeter hinge connector pivotally mounted to the shaft by means of a teeter hinge having an axis of rotation disposed perpendicularly to the axis of the shaft, **characterized in that** the mutual angular configuration of the two-bladed rotors, measured in a plane orthogonal to the axis of the shaft does not exceed 45 degrees, wherein the relative angular displacement of the blades (2) of the subsequent rotors in the blade assembly on one side of the shaft (1) is from 10 to 45 degrees.

2. The rotor according to claim 1, wherein each two-bladed rotor is mounted on the separate teeter hinge (3), wherein the axis of rotation of each teeter hinge (3) is disposed in a different plane orthogonal to the axis of the shaft (1).

3. The rotor according to claim 1, wherein each two-bladed rotor is mounted on the separate teeter hinge (3), wherein the axis of rotation of each teeter hinge (3) is disposed in the same plane orthogonal to the axis of the shaft (1).

4. The rotor according to claim 1, wherein the two-bladed rotors are rigidly connected via teeter hinge connectors (5) which are teeter hinge mounted on the common teeter hinge (3).

5. The rotor according to claim 1, wherein the two-bladed rotors are provided with a blade pitch control mechanism (4) for the blades (2) which is mounted to the teeter hinge connector (5) between each blade (2) and the teeter hinge (3).

6. The lift rotor to a rotorcraft, particularly to a gyroplane, provided with a teeter hinge member pivotally mounted to a shaft via a teeter hinge having an axis of rotation disposed perpendicularly to the axis of the shaft to which rotor blades are attached, **characterized in that**, it comprises at least two pairs of opposed blades (2) attached to the teeter hinge member (6, 7), wherein the mutual angular configuration of the blades (2) in the blade assembly on one side of the shaft (1), measured in a plane orthogonal to the axis of the shaft (1), does not exceed 45 degrees, and the angular displacement of the subsequent blades (2) in the blade assembly on one side of the shaft (1) is from 10 to 45 degrees.

7. The rotor according to claim 6, wherein the teeter hinge member (6, 7) is provided with a blade assembly pitch control mechanism (4) for the assembly of blades (2) which is mounted on both sides of the teeter hinge (3) to the teeter hinge member (6, 7).
